# EUROPÄISCHE PATENTANMELDUNG

(11) **EP 2 383 103 A1**
(43) Veröffentlichungstag der Anmeldung: **02.11.2011**
(21) Anmeldenummer: 11003290.1
(22) Anmeldetag: 19.04.2011
(51) Int. Cl.: B29C 65/02, B29C 59/10, B29C 65/00, B29C 59/12

(54) **Verfahren zum Lichtbogenschweissen von elektrisch leitfähigem Kunststoff und mit diesem Verfahren hergestellten Produkten**

(30) Priorität: 27.04.2010 DE 102010018426; 28.07.2010 EP 10007863
(71) Anmelder: Linde AG, 80331 München (DE)
(72) Erfinder: Matz, Christoph, 85716 Unterschleißheim (DE)
(74) Vertreter: Gellner, Bernd

(57) **Zusammenfassung**

Es wird ein Verfahren zum Schweißen mit übertragenem Lichtbogen und/oder zur Oberflächenbearbeitung durch einen übertragenen Lichtbogen von Werkstoffen offenbart, bei denen es sich um elektrisch leitfähige Kunststoffe handelt.

## Beschreibung

Die vorliegende Erfindung betrifft ein Verfahren zum Schweißen und/oder zur Oberflächenbearbeitung mit übertragenen Lichtbogen von Werkstoffen, bei denen es sich um elektrisch leitfähige Kunststoffe handelt.

Unter Schweißen versteht man das unlösbare Verbinden zweier Werkstoffe unter Anwendung von Wärme oder Druck. Wenn Wärme angewandt wird, werden die zu verbindenden Werkstücke angeschmolzen oder erweicht. Beim Abkühlen verbinden sich dann die Werkstoffe, wobei gegebenenfalls auch noch Druck ausgeübt wird.

Feuerschweißen ist die älteste bekannte Schweißmethode, sie wurde z.B. zum Schmieden von Dolchen und Schwertern verwendet. Eine weitere Schweißmethode, bei der Verbrennung eine Rolle spielt, ist das Gasschmelzschweißen mit einer Sauerstoff-Acetylen-Flamme.

Das älteste elektrische Schweißverfahren ist das Lichtbogenhandschweißen. Ein elektrischer Lichtbogen zwischen einer als Zusatzwerkstoff dienenden abschmelzenden Elektrode und dem Werkstück liefert die erforderliche Schweißtemperatur. Dabei wird in der Regel die die abschmelzende Elektrode als Anode (Pluspol) verwendet und das Werkstück als Kathode (Minuspol). Beim Schweißen mit Wechselstrom werden die Pole zwischen Werkstück und Elektrode gewechselt. Beim sogenannten Impulsschweißen brennt der Lichtbogen nicht ununterbrochen sondern nur während Impulsen. Man nennt diese Arten von Schweißen, bei der ein Lichtbogen zwischen abschmelzender Elektrode und Werkstück brennt, auch Schweißen mit übertragenem Lichtbogen. Beim Schweißen mit übertragenem Lichtbogen muss das Werkstück elektrisch leitend sein.

Traditionell handelt es sich bei den Werkstoffen, die durch Schweißen mit übertragenem Lichtbogen aneinandergefügt werden, um metallische Werkstücke. Heute werden beim Schweißen mit übertragenem Lichtbogen häufig halbmechanische Verfahren eingesetzt, wie das halbmechanische Schweißen mit abschmelzender Elektrode (MIG/MAG-Schweißen), mit nicht-abschmelzender Elektrode (WIG-Schweißen) oder mittels Lichtbogen zwischen zwei Werkstücken.

Ferner gibt es auch das sogenannte Wolframplasmaschweißen. Dabei entsteht durch Einschnürung eines Lichtbogens ein Plasmastrahl. Das Plasma kann zwischen Elektrode und Werkstück brennen (übertragener Lichtbogen), wobei das Werkstück dann wieder elektrisch leitend sein muss. Dieses Plasmaschweißen wird auch als Plasmalichtbogenschweißen bezeichnet. Das Plasma kann aber auch zwischen der Elektrode und der Düse brennen. In diesem Fall spricht man von einem nicht übertragenen Lichtbogen und von Plasmastrahlschweißen. Beim Plasmastrahlschweißen muss das Werkstück nicht elektrisch leiten sein, weil es nicht als Elektrode dient. Letztgenanntes trifft übrigens auch auf das Laserstrahlschweißen zu.

Übliche Schweißverfahren für die üblichen nicht leitenden Kunststoffe sind z.B. Laserstrahlschweißen oder Schweißen mit nicht übertragenem Lichtbogen. Kunststoffe können aber beispielsweise auch noch durch Reibschweißen, Ultraschallschweißen oder Schweißen durch ohmsche Erwärmung von in den Kunststoff eingelassenen Drähten verbunden werden.

Ein Beispiel für ein Schweißen von Kunststoffen mit nicht übertragenem Lichtbogen ist in der US 3,802,990 A zu finden. Dort kann in einer Ausführungsform zwischen zwei Elektroden beim Anlegen von Gleichspannung ein Lichtbogen zwischen den beiden Elektroden gezündet werden, der auch teilweise durch die zu verbindenden Kunststofffolien verläuft, die dadurch verschweißt werden.

Die JP 62062733 A offenbart ein Verfahren, bei dem durch ohmsches Erwärmen zweier in Kontakt stehender Flächen von Kunststoffen, die einen Durchleitwiderstand von weniger als 1000 Ω/cm aufweisen, mittels Durchleiten eines Stroms die in Kontakt stehenden Flächen angeschmolzen und durch Pressen verschweißt werden.

Seit einiger Zeit sind jedoch auch elektrisch leitfähige Kunststoffe auf dem Markt.

Dazu gehören einerseits elektrisch leitfähige Polymere, auch als elektrisch selbstleitende Polymere bezeichnet, die ohne leitfähigen Zusatz oder Füllstoff den elektrischen Strom leiten. Beispiele sind Polyacetylen, Polyanilin, Polyparaphenylen, Polypyrrol und Polythiophen.

Andererseits bezeichnet man auch Polymere, die durch einen Zusatz oder Füllstoff leitfähig gemacht worden sind, als elektrisch leitfähige Kunststoffe. Als Grundpolymere können dabei praktisch alle bekannten nicht leitenden Polymere dienen. Als Füllstoffe kommen dabei beispielsweise Leitfähigkeitsruß, Graphit, Eisenoxid- oder Aluminiumteilchen, Silberpulver, Kohlenstofffasern und neuerdings auch Kohlenstoffnanoröhrchen (z.B. in einem Polyoxymethylen (Firma BASF)) in Betracht.

Häufig werden elektrisch leitfähige Kunststoff zur Verringerung der elektrostatischen Aufladung eingesetzt. Es gibt jedoch auch zahlreiche weitere Anwendungen.

Der elektrische Widerstand von elektrisch leitfähigen Kunststoffen liegt in jedem Fall um mehrere Zehnerpotenzen unter dem Widerstand von elektrisch nicht leitfähigen Kunststoffen (Isolatoren), die einen Oberflächenwiderstand in der Größenordnung von etwa 10¹² Ω oder mehr aufweisen. Gewöhnlich spricht man bei einem Oberflächenwiderstand < etwa 10⁶ Ω von elektrisch leitfähigen Kunststoffen.

Es hat sich nun überraschend herausgestellt, dass elektrisch leitfähige Kunststoffe leicht durch Schweißen mit übertragenem Lichtbogen (im Folgenden: Lichtbogenschweißen) aneinandergefügt und/oder mittels übertragenem Lichtbogen oberflächenbearbeitet werden können.

Unter Schweißen mit übertragenem Lichtbogen bzw. unter Oberflächenbearbeitung mittels übertragenem Lichtbogen wird hierein ein Verfahren verstanden, bei dem der Lichtbogen während des Schweißens oder der Oberflächenbehandlung zwischen Werkstück und Elektrode brennt. Die Elektrode kann dabei abschmelzend oder nichtabschmelzend sein.

In der EP 0 395 252 A2 ist ein Verfahren beschrieben, bei dem bei sehr hoher Gleichspannung (4 -10 kV) für kurze Zeit ein Lichtbogen gezündet wird, der aber gleich wieder erlischt (man würde hier besser von einem Zündfunken sprechen). Durch diese Vorgehensweise werden kleine kraterartige Löcher in die Oberfläche gebrannt. Ein solches Verfahren ist kein Verfahren gemäß der vorliegenden Erfindung.

Ein Verfahren zum Lichtbogenschweißen, das für das Schweißen/Bearbeiten von Kunststoffen in Frage kommt, ist das Schweißen/Bearbeiten mit nicht-abschmelzender Elektrode (WIG-Schweißen).

Die verschiedenen Varianten des Lichtbogenschweißens oder -fügens mit nicht-abschmelzender Elektrode sind dem Fachmann bekannt. Erwähnt werden sollen das Wolfram-Inertgas(WIG)-Schweißen - hier insbesondere das Gleichstromschweißen, bei dem die Wolframelektrode auf dem Minuspol liegt -, das WIG-Impulsschweißen und das Wolfram-Plasmaschweißen, einschließlich Plasma-Stichlochschweißen und Mikroplasma-Schweißen.

Ein zweites Verfahren für das Schweißen/Bearbeiten von Kunststoffen ist das Lichtbogenschweißen mit abschmelzender Elektrode. Die abschmelzende Elektrode umfasst in diesem Fall natürlich kein Metall, sondern ein hochschmelzender, leitfähiger Kunststoff.

Ein weiteres Verfahren für das Lichtbogenschweißen von Kunststoffen ist das Schweißen/Bearbeiten, bei dem der Lichtbogen über einen Spalt zwischen zwei getrennten Werkstücken (oder einem Werkstück, das durch einen nicht-leitenden Kunststoff in zwei Hälften geteilt ist) hinweg erzeugt wird. Ein Werkstück bildet dabei den Minus-Pol, das andere den Plus-Pol. Durch Anlegen einer Spannung wird ein Lichtbogen gezündet, so dass die aneinanderzufügenden Kanten der beiden Werkstücke weich werden. Dann werden diese zusammengedrückt, wobei der Lichtbogen erlischt.

Eine Abwandlung dieses Schweißverfahrens entspricht dem sogenannten Bolzenschweißen bei Metallen. Ein größeres, flächiges Werkstück und ein kleineres, oft längliches Werkstück werden in Berührung gebracht, wobei das kleinere Werkstück mit einer Zange oder ähnlichem gehalten wird. Die Werkstücke werden dann so auseinander gezogen, dass sich ein schmaler Spalt ausbildet, und gleichzeitig wird eine Spannung an ihnen anlegt, so dass sich für kurze Zeit ein Lichtbogen ausbildet und die Werkstücke angeschmolzen werden. Der Stromkreis wird dann unterbrochen und die Werkstücke werden sofort zusammengepresst

Das erfindungsgemäße Lichtbogenschweißen von Kunststoffen wird im Allgemeinen mit Schutzgas vorgenommen, obwohl dies nicht zwingend notwendig ist. Beim Schweißen mit abschmelzender und nicht-abschmelzender Elektrode kann das Schutzgas über eine Düse an der Elektrode zugeführt werden. Es kann aber in diesem Fall sowie bei den anderen oben angesprochenen Schweißverfahren auch durch eine unabhängige Düse zur Schweißnaht gelenkt werden. Außerdem kann in jedem Fall in einer Schutzgas enthaltenden Kammer geschweißt werden.

Als Schutzgase kommen alle Gase in Betracht, die üblicherweise beim Lichtbogenschweißen eingesetzt werden, z.B. Helium, Argon, Neon, Xenon, Krypton, Stickstoff, Wasserstoff und deren Gemische und als Zusatz auch Kohlendioxid. Dem Schutzgas können gegebenenfalls Dotiermengen von NO, N₂O, O₂ und/oder unter Normalbedingungen gasförmigen Kohlenwasserstoffen, bevorzugt Acetylen, beigemischt sein. Das Arbeiten mit Schutzgas, das keine die Verbrennung unterhaltenden Gase enthält und von Luftsauerstoff abschirmt, kann die Entflammung und das Brennen des Kunststoffes verhindern.

Auch Zusatzwerkstoffe können beim erfindungsgemäßen Lichtbogenschweißen verwendet werden, beispielsweise um Spalte oder Lücken aufzufüllen oder um ungleiche Kunststoffe zu verbinden. Bei denn Zusatzwerkstoffen kann es sich ebenfalls um leitfähige Kunststoffe handeln, es können aber auch nicht-leitfähige, schmelzbare Kunststoffe eingesetzt werden.

Die Oberflächenbearbeitung des Kunststoffes durch Lichtbogen schließt beispielsweise eine Reinigung, z. B. nach dem Spritzgießen, eine Beeinflussung der Polarität z. B. vor dem Drucken, ein Anrauen, ein Aktivieren oder ein Umschmelzen ein.

Die Schweißbedingungen für das Schweißen der leitfähigen Kunststoffe sind im allgemeinen milder als für das Schweißen von metallischen Werkstücken.

So liegen die Schweißtemperaturen, je nach Kunststoff und Schweißgeschwindigkeit, beim erfindungsgemäßen Verfahren im Allgemeinen zwischen etwa 50 und etwa 300 °C. Die Schweißströme betragen im Allgemeinen etwa 0,5 bis etwa 50 A, z. B. bis etwa 30 A, häufig bis zu maximal etwa 10 A. Die Schweißspannungen liegen unter 1000 V, im Allgemeinen im Bereich von etwa 1 bis etwa 500 V, vorzugsweise von etwa 5 bis etwa 100 V. Die Elektrodenabstände betragen häufig etwa 0,5 bis etwa 7 mm, häufiger etwa 1 bis etwa 5 mm. Im Allgemeinen können Schweißgeschwindigkeiten von etwa 0,01 bis 1 m/min erreicht werden.

Die Vorteile des erfindungsgemäßen Verfahrens sind, dass es lagenunabhängig durchgeführt werden kann und dass es schneller und apparative unaufwändiger ist als ein Schweißen mit nicht übertragenem Lichtbogen oder ein Laserschweißen. Weiter ist ein gleichzeitiges Aktivieren und Verbinden der Werkstoffe möglich.

## Patentansprüche

1. Verfahren zum Schweißen mit übertragenem Lichtbogen und/oder zur Oberflächenbearbeitung durch einen übertragenen Lichtbogen von Werkstoffen, **dadurch gekennzeichnet, dass** es sich bei dem Werkstoff sich um einen elektrisch leitfähigen Kunststoff handelt.

2. Verfahren nach Anspruch 1, **dadurch gekennzeichnet, dass** das Schweißen bzw. die Oberflächenbearbeitung mit nicht-abschmelzender Elektrode vorgenommen wird.

3. Verfahren nach Anspruch 1 oder 2, **dadurch gekennzeichnet, dass** das Schweißen bzw. die Oberflächenbearbeitung mit Schutzgas durchgeführt wird.

4. Verfahren nach Anspruch 3, **dadurch gekennzeichnet, dass** das Schutzgas aus Helium, Argon, Stickstoff, Wasserstoff, Kohlendioxid und deren Mischungen ausgewählt ist.

5. Verfahren nach Anspruch 3 oder 4, **dadurch gekennzeichnet, dass** dem Schutzgas Dotiermengen von NO, N₂O, O₂, und/oder einem oder mehreren unter Normalbedingungen gasförmigen Kohlenwasserstoffen, bevorzugt Acetylen, beigemischt sind.

6. Verfahren nach einem der vorangehenden Ansprüche, **dadurch gekennzeichnet, dass** bei dem Schweißen ein Zusatzwerkstoff verwendet wird.

7. Verfahren nach einem der vorangehenden Ansprüche, **dadurch gekennzeichnet, dass** die Schweißtemperaturen im Bereich von 50 bis 300 °C liegen.

8. Verfahren nach einem der vorangehenden Ansprüche, **dadurch gekennzeichnet, dass** die Schweißströme im Bereich von 0,5 bis 50 A, bevorzugt 0,5 bis 30 A, noch mehr bevorzugt 0,5 bis 10 A liegen.

9. Werkstück, das nach einem der Ansprüche 1 bis 8 geschweißt wurde.

10. Werkstück, das nach einem der Ansprüche 1 bis 8 oberflächenbearbeitet wurde.
